(19) Europäisches Patentamt
European Patent Office
Office européen des brevets

(11) **EP 3 663 195 B1**

(12) **FASCICULE DE BREVET EUROPEEN**

(45) Date de publication et mention
de la délivrance du brevet:
**24.01.2024 Bulletin 2024/04**

(21) Numéro de dépôt: **19213631.5**

(22) Date de dépôt: **04.12.2019**

(51) Classification Internationale des Brevets (IPC):
**B64C 25/40** *(2006.01)* **B60T 8/17** *(2006.01)*
**B60T 8/1755** *(2006.01)*

(52) Classification Coopérative des Brevets (CPC):
**B64C 25/405; B60T 8/1703; B60T 8/1755;**
B60T 2201/16; Y02T 50/80

(54) **PROCEDE D'ASSERVISSEMENT EN VITESSE D'UN DISPOSITIF D'ENTRAINEMENT EN ROTATION DES ROUES D'UN AERONEF**

VERFAHREN ZUR STEUERUNG DER GESCHWINDIGKEIT EINES DREHANTRIEBS DER RÄDER EINES FLUGZEUGS

METHOD FOR CONTROLLING THE SPEED OF A MOTOR DRIVE OF THE WHEELS OF AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2018 FR 1872387**

(43) Date de publication de la demande:
**10.06.2020 Bulletin 2020/24**

(73) Titulaire: **Safran Landing Systems**
**78140 Vélizy-Villacoublay (FR)**

(72) Inventeur: **BOISSARD, Laurent**
**77550 Moissy-Cramayel (FR)**

(74) Mandataire: **Lavialle, Bruno François Stéphane et al**
**Cabinet Boettcher**
**5 rue de Vienne**
**75008 Paris (FR)**

(56) Documents cités:
EP-A1- 0 038 606     WO-A2-2006/078322
US-A1- 2015 375 854     US-A1- 2017 089 939
US-B2- 8 376 273     US-B2- 9 280 155

## Description

L'invention concerne un procédé d'asservissement en vitesse d'un dispositif d'entraînement en rotation des roues d'un aéronef.

## ARRIERE PLAN DE L'INVENTION

On connaît des dispositifs d'entraînement en rotation des roues d'un aéronef permettant de déplacer l'aéronef au sol sans l'aide de ses groupes motopropulseurs. Le dispositif d'entraînement comprend des actionneurs d'entraînement adaptés à entraîner des roues de l'aéronef en rotation, lorsqu'ils sont placés en position d'engagement avec les roues. Sur un aéronef comportant deux atterrisseurs principaux comme par exemple l'AIRBUS A320, il a été proposé des dispositifs d'entraînement comportant sur chacun des atterrisseurs principaux au moins un actionneur d'entraînement adapté à entraîner au moins une roue en rotation. Diverses stratégies de commande de ces dispositifs d'entraînement ont été proposées, dont des stratégies d'asservissement d'une vitesse de l'aéronef à une consigne de vitesse générée par le pilote. Le document WO 2006/078322 A2 divulgue un asservissement en vitesse d'un atterrisseur auxiliaire .

Un tel asservissement nécessite de mesurer la vitesse de l'aéronef, ou à tout le moins d'en faire une estimation. On peut par exemple utiliser la mesure de vitesse donnée par la centrale inertielle de l'aéronef, une estimation de vitesse donnée par un GPS embarqué, ou encore une moyenne des vitesses circonférentielles des roues entraînées par les actionneurs du dispositif d'entraînement, ces vitesses étant déduites directement de la vitesse de rotation des moteurs des actionneurs d'entraînement ou de la vitesse de rotation des roues entraînées. La vitesse ainsi estimée est sensiblement celle du centre de gravité de l'aéronef.

Des essais ont permis de montrer que dans certaines circonstances, notamment lors de virages, les pilotes de l'aéronef pouvaient avoir l'impression de subir des vitesses bien plus importantes que la vitesse de consigne.

## OBJET DE L'INVENTION

L'invention vise à proposer un procédé d'asservissement en vitesse d'un dispositif d'entraînement en rotation des roues d'un aéronef diminuant cette sensation d'emballement ressenti par les pilotes lors de virages.

## RESUME DE L'INVENTION

En vue de la réalisation de ce but, on propose un procédé d'asservissement en vitesse d'un dispositif d'entraînement en rotation des roues d'un aéronef, comportant l'étape de réguler une vitesse de l'aéronef conformément à une consigne de vitesse générée par le pilote, dans lequel la vitesse de l'aéronef régulée est une vitesse mesurée ou estimée d'une portion de l'aéronef située au niveau d'une pointe avant de l'aéronef.

Ainsi, lors de virages, la vitesse au niveau de la pointe avant de l'aéronef, qui se situe typiquement à plusieurs mètres du centre de gravité de l'appareil, est plus représentative de la vitesse perçue par les pilotes que la vitesse au centre de gravité de l'appareil. Les pilotes n'ont plus l'impression de l'emballement de la vitesse lors de virages.

Selon un mode préféré de mise en oeuvre, la vitesse à réguler est une estimation d'une vitesse circonférentielle de roues d'un atterrisseur auxiliaire de l'aéronef situé sous la pointe avant de l'aéronef.

## BREVE DESCRIPTION DES DESSINS

L'invention sera mieux comprise à la lumière de la description qui suit d'un mode particulier de mise en oeuvre de l'invention, en référence aux figures des dessins annexés, parmi lesquelles :

- la figure 1 est une vue schématique montrant la trajectoire du centre de gravité d'un aéronef et la trajectoire suivie par les roues de l'atterrisseur auxiliaire ;
- la figure 2 est une vue schématique de dessus d'un aéronef montrant les diverses grandeurs utilisées pour l'estimation de la vitesse longitudinale au niveau des roues de l'atterrisseur auxiliaire.

## DESCRIPTION DETAILLEE DE L'INVENTION

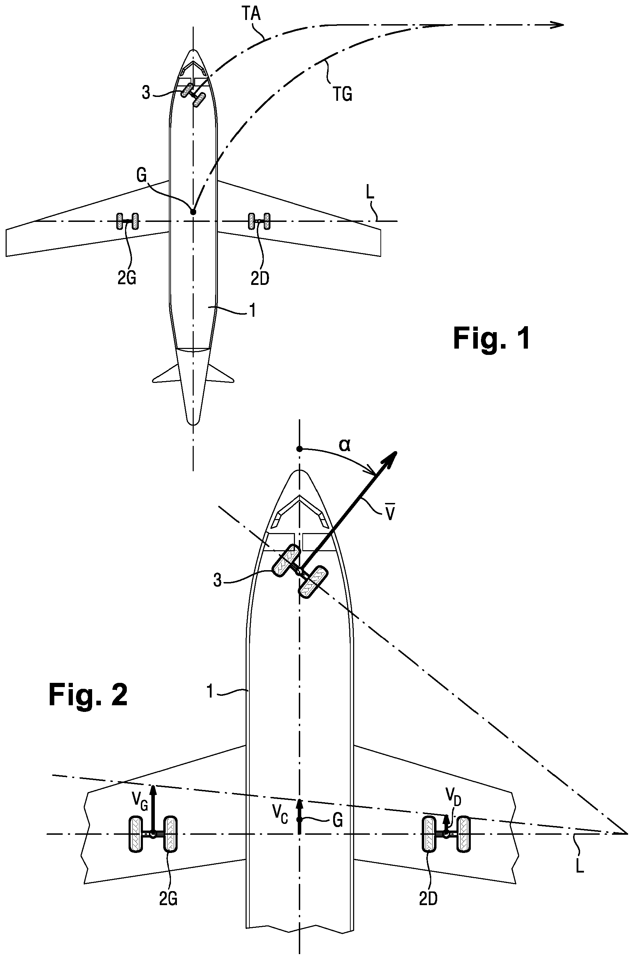

La figure 1 illustre un aéronef 1 en train d'effectuer un virage vers la droite. L'aéronef est équipé d'un atterrisseur principal gauche 2G et d'un atterrisseur principal droit 2D, et d'un atterrisseur auxiliaire 3 situé au niveau d'une pointe avant 4 de l'aéronef. On remarquera que l'atterrisseur auxiliaire est situé sensiblement au niveau du cockpit de l'aéronef. Sur un aéronef du type AIRBUS A320, le cockpit et l'atterrisseur auxiliaire sont éloignés d'une bonne dizaine de mètres d'une ligne imaginaire L passant par les atterrisseurs principaux 2G, 2D. Le centre de gravité G de l'aéronef se situe légèrement devant la ligne imaginaire L. Ici, les atterrisseurs principaux 2G, 2D sont équipés d'un dispositif d'entraînement des roues en rotation, comportant sur chacune des atterrisseurs principaux un actionneur d'entraînement en rotation (par exemple des roues extérieures). Un asservissement permet de réguler une vitesse de l'aéronef à une consigne de vitesse générée par le pilote, par exemple au moyen d'une manette dans le cockpit. Le dispositif d'entraînement et le type d'asservissement en vitesse mis en œuvre n'est pas l'objet de l'invention, et peuvent être de tout type. On peut par exemple utiliser un asservissement de type proportionnel-intégral-dérivé à boucle de rétroaction.

On a illustré la trajectoire TG du centre de gravité G, ainsi que la trajectoire TA de l'atterrisseur auxiliaire 3 lors d'un virage. On constate que ces trajectoires sont assez différentes, générant des différences non négligeables de vitesses le long de ces deux trajectoires. Si on asservit la vitesse du centre de gravité de l'aéronef à la consigne de vitesse ou la vitesse d'un point proche dudit centre de gravité, comme par exemple le point d'intersection de l'axe longitudinal de l'aéronef avec la ligne imaginaire L, les pilotes, qui sont situés dans la pointe avant de l'aéronef, donc sensiblement au niveau de l'atterrisseur auxiliaire 3, vont avoir l'impression d'un emballement de la vitesse de l'aéronef, notamment lors de virages.

L'invention a pour but de diminuer cette sensation et pour ce faire, propose d'asservir à une consigne de vitesse générée par le pilote non pas une vitesse au niveau du centre de gravité, mais une vitesse au niveau de la pointe avant de l'aéronef. Pour ce faire, et selon un mode préféré de mise en oeuvre, on estime une vitesse $\overline{V}$ au niveau de l'atterrisseur auxiliaire 3, et c'est cette vitesse que l'asservissement régulera conformément à la vitesse de consigne.

Selon un premier mode particulier de mise en oeuvre, on estime la vitesse à réguler $\overline{V}$ par la relation :

$$\overline{V} = \frac{V_c}{\cos \alpha}$$

Où $\alpha$ est l'angle d'orientation des roues de l'atterrisseur auxiliaire, et $V_c$ est la vitesse longitudinale :

$$V_c = \frac{V_G + V_D}{2}$$

Les vitesses $V_G$, $V_D$ sont les vitesses circonférentielles respectivement d'une roue de l'atterrisseur principal gauche 2G et d'une roue de l'atterrisseur principal droit 2D (par exemple les roues extérieures des deux atterrisseurs principaux, ou les roues intérieures des deux atterrisseurs principaux). $V_c$ représente la vitesse d'un point à l'intersection de l'axe longitudinal et de la ligne imaginaire L. Les vitesses $V_G$, $V_D$ sont par exemple estimées à partir de la vitesse de rotation des roues entraînées qui peut être mesurée par des tachymètres équipant les atterrisseurs principaux, ou encore à partir de la vitesse de rotation du moteur des actionneurs du dispositif d'entraînement. Quant à l'angle $\alpha$ d'orientation des roues de l'atterrisseur auxiliaire, il est mesuré par un capteur angulaire installé sur l'atterrisseur auxiliaire.

Ainsi, la vitesse à réguler $\overline{V}$ peut être estimée uniquement par des mesures effectuées au niveau des roues, des actionneurs du dispositif d'entraînement, ou par des capteurs sur les atterrisseurs proprement dits, c'est-à-dire uniquement au moyen d'équipements du train d'atterrissage, ce qui évite tout échange d'information avec les systèmes de contrôle de vol de l'aéronef pour estimer la vitesse à réguler $\overline{V}$.

Selon un deuxième mode particulier de mise en oeuvre, on estime l'angle $\alpha$ d'orientation des roues de l'atterrisseur auxiliaire au moyen du taux de lacet $\gamma$ de l'aéronef (c'est-à-dire la vitesse angulaire de l'aéronef autour d'un axe vertical), fourni par exemple par la centrale inertielle de l'aéronef :

$$\tilde{\alpha} = \arctan\left(\frac{\dot{\gamma} \cdot L_x}{V_c}\right)$$

$L_x$ est la distance (mesurée longitudinalement) entre la ligne imaginaire L et l'atterrisseur auxiliaire 3. La vitesse à réguler $\overline{V}$ est alors estimée par :

$$\overline{V} = \frac{V_c}{\cos \tilde{\alpha}}$$

## Revendications

1. Procédé d'asservissement en vitesse d'un dispositif d'entraînement en rotation de roues portées par des atterrisseurs principaux d'un aéronef, comportant l'étape de réguler une vitesse de l'aéronef conformément à une consigne de vitesse générée par le pilote, **caractérisé en ce que** la vitesse de l'aéronef régulée est une vitesse ($\overline{V}$) estimée d'une portion de l'aéronef au niveau d'une pointe avant de l'aéronef au moyen de mesures effectuées au niveau des roues portées par les atterrisseurs principaux, d'actionneurs du dispositif d'entraînement, ou par des capteurs sur les atterrisseurs principaux.

2. Procédé selon la revendication 1, dans lequel la vitesse ($\overline{V}$) à réguler est estimée au moyen de vitesses circonférentielles ($V_G$, $V_D$) des roues portées respectivement par un atterrisseur principal gauche et un atterrisseur principale droit, et d'un angle d'orientation ($\alpha$) de roues portées par un atterrisseur auxiliaire disposé au niveau de la pointe avant de l'aéronef, par

$$\overline{V} = \frac{V_c}{\cos \alpha}$$

avec

$$V_c = \frac{V_G + V_D}{2}$$

3. Procédé selon la revendication 1, dans lequel la vitesse ($\overline{V}$) à réguler est estimée au moyen de vitesses circonférentielles ($V_G$, $V_D$) des roues portées respectivement par un atterrisseur principal gauche et un atterrisseur principale droit, et d'un taux de lacet ($\gamma$) de l'aéronef, par

$$\bar{V} = \frac{V_c}{\cos \tilde{\alpha}}$$

avec

$$V_c = \frac{V_G + V_D}{2}$$

et

$$\tilde{\alpha} = \arctan\left(\frac{\dot{\gamma} \cdot L_x}{V_c}\right)$$

Où $L_x$ est une distance (mesurée longitudinalement) entre une ligne imaginaire (L) passant par les atterrisseurs principaux (2G, 2D) et l'atterrisseur auxiliaire (3).

**Patentansprüche**

1. Verfahren zur Steuerung der Geschwindigkeit einer Drehantriebsvorrichtung von Rädern, die von Hauptfahrwerken eines Luftfahrzeugs getragen werden, umfassend den Schritt des Regulierens einer Geschwindigkeit des Luftfahrzeugs gemäß einem Geschwindigkeitssollwert, der von dem Piloten erzeugt wird, **dadurch gekennzeichnet, dass** die regulierte Geschwindigkeit des Luftfahrzeugs eine geschätzte Geschwindigkeit ($\bar{V}$) eines Abschnitts des Luftfahrzeugs im Bereich einer vorderen Spitze des Luftfahrzeugs mit Hilfe von Messungen ist, die im Bereich der von den Hauptfahrwerken getragenen Rädern durchgeführt werden, von Aktuatoren der Antriebsvorrichtung oder durch Sensoren an den Hauptfahrwerken.

2. Verfahren nach Anspruch 1, bei dem die zu regulierende Geschwindigkeit ($\bar{V}$) mit Hilfe von Umfangsgeschwindigkeiten ($V_G$, $V_D$) der Räder geschätzt wird, die von einem linken Hauptfahrwerk bzw. einem rechten Hauptfahrwerk getragen werden, und einem Ausrichtungswinkel ($\alpha$) der Räder, die von einem Hilfsfahrwerk getragen werden, das im Bereich der vorderen Spitze des Luftfahrzeugs angeordnet ist, durch

$$\bar{V} = \frac{V_C}{\cos \alpha}$$

mit

$$V_C = \frac{V_G + V_D}{2}$$

3. Verfahren nach Anspruch 1, bei dem die zu regulierende Geschwindigkeit ($\bar{V}$) mit Hilfe von Umfangsgeschwindigkeiten ($V_G$, $V_D$) der Räder geschätzt wird, die von einem linken Hauptfahrwerk bzw. einem rechten Hauptfahrwerk getragen werden, und einer Gierrate ($\gamma$) des Luftfahrzeugs, durch

$$\bar{V} = \frac{V_C}{\cos \tilde{\alpha}}$$

mit

$$V_C = \frac{V_G + V_D}{2}$$

und

$$\tilde{\alpha} = arctan\left(\frac{\dot{\gamma} \cdot L_x}{V_C}\right)$$

wobei $L_x$ ein Abstand (in Längsrichtung gemessen) zwischen einer imaginären Linie (L), die durch die Hauptfahrwerke (2G, 2D) hindurchgeht, und dem Hilfsfahrwerk (3) ist.

**Claims**

1. A method of speed control of a wheel rotation drive device carried by main landing gears of an aircraft, comprising the step of regulating an aircraft speed in accordance with a speed command generated by the pilot, **characterized in that** the speed of the regulated aircraft is an estimated speed ($\bar{V}$) of a portion of the aircraft at a nose tip of the aircraft by means of measurements made at the wheels carried by the main landing gears, by actuators of the drive device, or by sensors on the main landing gears .

2. A method according to claim 1, wherein the speed ($V$) to be regulated is estimated by means of circumferential speeds ($V_G$, $V_D$) of the wheels carried respectively by a left main landing gear and a right main landing gear, and a steering angle ($\alpha$) of the wheels carried by an auxiliary landing gear arranged at the nose tip of the aircraft, by

$$\bar{V} = \frac{V_c}{\cos \alpha}$$

where:

$$V_c = \frac{V_G + V_D}{2}$$

3.  A method according to claim 1, wherein the speed ($\bar{V}$) to be regulated is estimated by means of circumferential speeds ($V_G$, $V_D$) of the wheels carried respectively by a left main landing gear and a right main landing gear, and a yaw rate ($\gamma$) of the aircraft, by

$$\bar{V} = \frac{V_c}{\cos \tilde{\alpha}}$$

where:

$$V_c = \frac{V_G + V_D}{2}$$

and

$$\tilde{\alpha} = \arctan \left( \frac{\dot{\gamma} \cdot L_x}{V_c} \right)$$

Where $L_x$ is a distance (measured longitudinally) between an imaginary line (L) passing through the main landing gears (2G,2D) and the auxiliary landing gear (3).

**Fig. 1**

**Fig. 2**

**RÉFÉRENCES CITÉES DANS LA DESCRIPTION**

**Documents brevets cités dans la description**

- WO 2006078322 A2